# FASCICULE DE BREVET EUROPEEN

(11) **EP 3 831 505 B1**
(45) Date de publication et mention de la délivrance du brevet: **12.02.2025**
(21) Numéro de dépôt: 20211267.8
(22) Date de dépôt: 02.12.2020
(51) Int. Cl.: B21D 53/04, F28F 3/14, B23P 15/26, B23K 9/007, B21D 26/021, B21D 26/059, F28F 3/12, B21D 26/031, B23K 26/244, B23K 101/14

(54) **PROCEDE DE FABRICATION D'UN ECHANGEUR THERMIQUE EN TITANE**
VERFAHREN ZUR HERSTELLUNG EINES WÄRMETAUSCHERS AUS TITAN
METHOD FOR MANUFACTURING A HEAT EXCHANGER FROM TITANIUM

(30) Priorité: 05.12.2019 FR 1913817
(43) Date de publication de la demande: 09.06.2021
(73) Titulaire: AIRBUS OPERATIONS, 31060 Toulouse Cedex 9 (FR); Airbus, 31700 Blagnac (FR)
(72) Inventeur: MARGUET, Benoit, 31700 BLAGNAC (FR); GARNIER, César, 31060 TOULOUSE (FR); SACCONA, Pascal, 31060 TOULOUSE (FR)
(74) Mandataire: Cabinet Le Guen Maillet

(56) Documents cités:
- EP-A2- 0 614 062
- GB-A- 500 537
- JP-A- S57 193 248
- US-A- 3 018 543
- US-A- 3 036 369
- US-A- 3 839 975
- US-A- 4 700 445
- US-A1- 2011 180 237

## Description

### DOMAINE TECHNIQUE

La présente invention concerne un procédé de fabrication d'un échangeur thermique.

### ETAT DE LA TECHNIQUE ANTERIEURE

Un échangeur thermique permet d'échanger des calories entre un fluide chaud et un fluide froid tel qu'un fluide caloporteur. A cette fin, l'échangeur thermique prend la forme d'une plaque parcourue par un réseau de canaux dans lequel un des fluides circule tandis que l'autre fluide vient lécher la surface de la plaque Les documents JP S57193248 et US 3839975A divulguent des procédés de fabrication de tels échangeurs thermiques.

Une telle plaque est généralement réalisée en acier inoxydable ou en graphite.

Si un tel échangeur est facile à réaliser et performant, il est relativement lourd. De telles conditions peuvent être remplies lorsque l'échangeur thermique est mis en œuvre dans une pile à combustible utilisant le dihydrogène et le dioxygène.

### EXPOSE DE L'INVENTION

Un objet de la présente invention est de proposer un procédé de fabrication d'un échangeur thermique à partir de feuillards de titane qui permet d'obtenir un échangeur thermique plus léger dont les performances sont au moins équivalentes à celles des échangeurs de chaleur de l'état de la technique. En outre, les procédés proposés permettent d'obtenir un échangeur thermique de manière simple et rapide.

A cet effet, est proposé un procédé de fabrication d'une plaque comportant des canaux, le procédé de fabrication comportant, conformément à la revendication 1:
- une étape de superposition au cours de laquelle deux feuillards en titane ou en alliage de titane sont superposés l'un sur l'autre,
- une étape de soudage au cours de laquelle les deux feuillards sont soudés ensemble le long des lignes de soudure,
- une étape d'obturation au cours de laquelle les zones entre le premier feuillard et le deuxième feuillard au niveau desquelles les zones entre les lignes de soudure débouchent au niveau d'un des bords du premier feuillard et du deuxième feuillard sont obturées,

- une étape de mise en pression au cours de laquelle un fluide comprimé est injecté au niveau d'un autre bord du premier feuillard et du deuxième feuillard, là où les zones entre les lignes de soudure débouchent entre le premier feuillard et le deuxième feuillard de manière à réaliser l'expansion des feuillards, et
   - une étape de débouchage au cours de laquelle les zones obturées lors de l'étape d'obturation sont débouchées,
où l'étape de superposition consiste successivement en une première étape de mise en place au cours de laquelle le premier feuillard est mis en place sur un moule, en une deuxième étape de mise en place au cours de laquelle le deuxième feuillard est mis en place sur le premier feuillard, et en une étape de recouvrement au cours de laquelle un contre-moule est mis en place sur le deuxième feuillard, où le moule et le contre-moule comportent une pluralité de trous, et l'étape de soudage consiste à introduire des aiguilles dans les trous du moule et des contre-aiguilles dans les trous du contre-moule et à alimenter les aiguilles et les contre-aiguilles par un générateur de tension pour souder les deux feuillards ensemble le long des lignes de soudure, et où le moule et le contre-moule comportent entre les trous, des formes femelles correspondant à des empreintes de canaux à obtenir.

Ce procédé de fabrication permet de souder les feuillards de titane entre eux et de les conformer par mise sous pression.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en coupe d'une plaque d'un échangeur thermique obtenu par un procédé de fabrication selon l'invention,
[Fig. 2] est une vue en perspective d'un outil mis en œuvre dans le cadre d'un procédé de fabrication selon un premier mode de réalisation qui ne fait pas l'objet de la revendication 1,
[Fig. 3] est une vue en perspective d'un outil mis en œuvre dans le cadre d'un procédé de fabrication selon un mode de réalisation de l'invention, et
[Fig. 4] est une vue en coupe d'un outil mis en œuvre dans le cadre d'un procédé de fabrication selon un troisième mode de réalisation qui ne fait pas l'objet de la revendication 1.

### EXPOSE DETAILLE DE MODES DE REALISATION

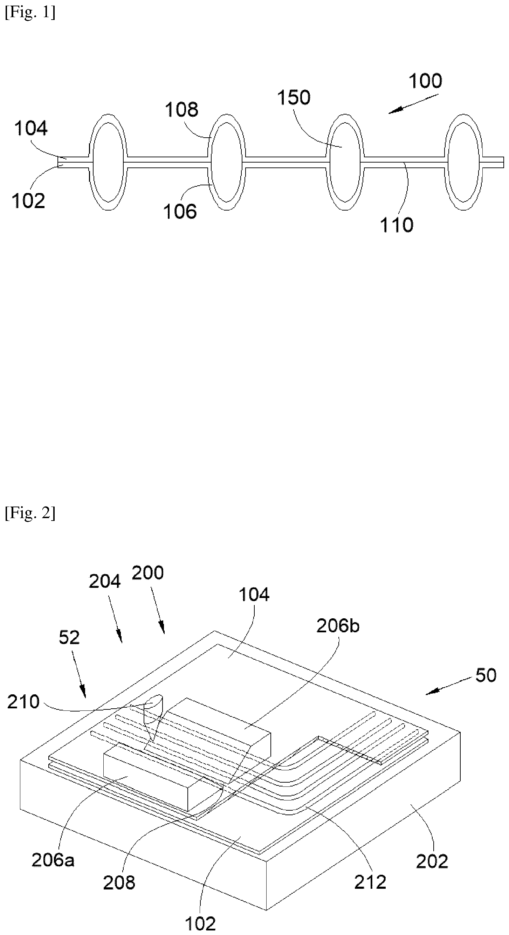

La Fig. 1 montre une plaque 100 pouvant être mise en œuvre dans un échangeur thermique et qui comporte un premier feuillard 102 et un deuxième feuillard 104. Les deux feuillards 102 et 104 sont en titane ou en alliage de titane.

Les deux feuillards 102 et 104 sont accolés l'un contre l'autre.

Chaque feuillard 102, 104 présente des déformations 106, 108, ici en arc d'ellipse. Chaque déformation 106 du premier feuillard 102 est en regard d'une déformation 108 du deuxième feuillard 104 de manière à délimiter entre elles un canal 150 qui permet de canaliser un fluide, en particulier un fluide caloporteur lorsque la plaque 100 est utilisée dans un échangeur thermique.

La forme des déformations 106, 108 peut varier et prendre par exemple une forme trapézoïdale, en oméga, circulaire, triangulaire, ...

La plaque 100 est alors disposée entre un système d'approvisionnement qui alimente la plaque 100 avec le fluide caloporteur, et un système de récupération qui récupère le fluide caloporteur en sortie de la plaque 100. La continuité fluidique entre le système d'approvisionnement et la plaque 100 s'effectue au niveau d'un premier bord de la plaque 100 et la continuité fluidique entre la plaque 100 et le système de récupération s'effectue au niveau d'un deuxième bord de la plaque 100, c'est-à-dire que les canaux 150 sont ouverts au niveau de ce premier bord et de ce deuxième bord afin de permettre le passage du fluide caloporteur.

Les deux feuillards 102 et 104 sont fixés l'un à l'autre par des points de soudure 110 réalisés entre deux déformations 106, 108 voisines.

La réalisation d'une telle plaque 100 en titane permet de réaliser un échangeur thermique plus léger et aussi performant, en particulier lorsqu'il est utilisé dans un système de refroidissement d'une pile à combustible.

La Fig. 2 montre un outil 200 qui permet de conformer deux feuillards 102 et 104 en titane ou en alliage de titane sous la forme de la plaque 100 au cours d'un procédé qui ne fait pas l'objet de la revendication 1. Pour des facilités de visualisation, le deuxième feuillard 104 est partiellement découpé.

L'outil 200 comporte un socle 202 et un outil de soudage 204. L'outil de soudage 204 comporte ici des pièces d'appui 206a-b entre lesquelles est délimité un canal de soudage 208 et une unité de soudage 210 qui se déplace le long du canal de soudage 208, par exemple à l'aide d'un chariot mobile.

L'unité de soudage 210 est par exemple un émetteur laser permettant de réaliser un soudage laser, mais toute autre technique peut être utilisée comme par exemple le soudage par faisceau d'électrons, soudage par résistance, soudage par friction-malaxage ou par soudage par diffusion.

Lorsqu'une ligne de soudure a été réalisée, les pièces d'appui 206a-b et l'unité de soudage 210 sont déplacées pour réaliser une nouvelle ligne de soudure.

Les deux feuillards 102 et 104 sont disposés l'un sur l'autre et entre le socle 202 et l'outil de soudage 204 et plus particulièrement ici entre le socle 202 et les pièces d'appui 206a-b.

Après que l'unité de soudage 210 a réalisé l'ensemble des lignes de soudure, les zones entre les lignes de soudure, c'est-à-dire les zones où les deux feuillards 102 et 104 ne sont pas soudés ensemble, seront déformées et constitueront à termes les canaux 150 de la plaque 100.

Comme mentionné ci-dessus, certains canaux 150 permettent l'écoulement du fluide caloporteur qui pénètre dans la plaque 100 ou qui sort hors de la plaque 100 et ces canaux 150 débouchent respectivement au niveau d'un premier bord 50 de la plaque 100 et au niveau d'un deuxième bord 52 de la plaque 100 qui correspondent respectivement à des premiers bords du premier feuillard 102 et du deuxième feuillard 104, et à des deuxièmes bords du premier feuillard 102 et du deuxième feuillard 104.

Les zones entre les lignes de soudure vont mener à la création de ces canaux 150 débouchant aux bords 50 et 52 et elles s'étendent donc respectivement jusqu'au premier bord 50 de la plaque 100 et jusqu'au deuxième bord 52 de la plaque 100.

Afin de conformer les canaux 150, un fluide sous pression est injecté entre les feuillards 102 et 104 et au niveau des zones entre les lignes de soudure, et les deux feuillards 102 et 104 au niveau de ces zones vont alors s'écarter l'un de l'autre pour former les canaux 150. Pour réaliser l'injection du fluide sous pression, il est nécessaire d'obturer les zones qui sont entre le premier feuillard 102 et le deuxième feuillard 104 et qui sont au niveau d'un des bords 50, 52 du premier feuillard 102 et du deuxième feuillard 104 le long duquel les zones entre les lignes de soudure débouchent à une de leurs extrémités. L'injection du fluide sous pression s'effectue alors au niveau de l'autre bord 52, 50 du premier feuillard 102 et du deuxième feuillard 104 le long duquel les zones entre les lignes de soudure débouchent à leurs autres extrémités.

Pour que la conformation des canaux 150 soit celle attendue, avant l'injection du fluide sous pression, le premier feuillard 102 et le deuxième feuillard 104 sont disposés entre deux matrices, où chaque matrice présente des formes femelles correspondant aux empreintes des canaux 150 à obtenir. Ainsi, lors de l'injection du fluide comprimé, les feuillards 102 et 104 vont s'écarter et venir épouser les formes femelles et ainsi les canaux 150 vont se former. Les formes femelles sont réalisées sur les faces des matrices qui sont contre les feuillards 102 et 104.

Les zones préalablement obturées sont ensuite débouchées pour permettre l'écoulement du fluide dans les canaux 150 de la plaque 100.

Un procédé de fabrication d'une plaque 100 d'un échangeur thermique qui ne fait pas l'objet de la revendication 1 comporte;
- une première étape de mise en place au cours de laquelle un premier feuillard 102 est mis en place sur le socle 202,
- une deuxième étape de mise en place au cours de laquelle un deuxième feuillard 104 est mis en place sur le premier feuillard 102,
- une étape de recouvrement au cours de laquelle les pièces d'appui 206a-b sont disposées sur le deuxième feuillard 104,
- une étape de soudage au cours de laquelle l'unité de soudage 210 est déplacée le long du canal de soudage 208 pour souder les deux feuillards 102 et 104 ensemble le long des lignes de soudure,
- une étape d'obturation au cours de laquelle les zones entre le premier feuillard 102 et le deuxième feuillard 104 au niveau desquelles les zones entre les lignes de soudure débouchent au niveau d'un des bords 50, 52 du premier feuillard 102 et du deuxième feuillard 104 sont obturées,
- une troisième étape de mise en place au cours de laquelle le premier feuillard 102 et le deuxième feuillard 104 soudés sont mis en place entre deux matrices, où chacune présente des formes femelles,
- une étape de mise en pression au cours de laquelle le fluide comprimé est injecté au niveau d'un autre bord 52, 50 du premier feuillard 102 et du deuxième feuillard 104, là où les zones entre les lignes de soudure débouchent entre le premier feuillard 102 et le deuxième feuillard 104 de manière à réaliser l'expansion des feuillards 102 et 104 au niveau des formes femelles, et
- une étape de débouchage au cours de laquelle les zones obturées lors de l'étape d'obturation sont débouchées.

L'étape de soudage est répétée pour chaque ligne de soudure après déplacement des pièces d'appui 204a-b afin d'obtenir le schéma souhaité pour les canaux 150. Un tel procédé est relativement simple et rapide à mettre en œuvre.

L'étape d'obturation peut être effectuée durant l'étape de soudage.

Pour améliorer la précision des soudures, c'est-à-dire pour éviter que les deux feuillards 102 et 104 se soudent l'un à l'autre sur une surface trop importante, des cordons 212 d'un isolant thermique et électrique sont déposés entre les deux feuillards 102 et 104 aux endroits où aucune soudure entre les deux feuillards 102 et 104 ne doit être réalisée, c'est-à-dire au niveau des zones entre les lignes de soudure. Les cordons 212 sont réalisés par exemple en poudre céramique.

A terme, les zones où ont été déposés les cordons 212 constitueront les canaux 150 de la plaque 100.

Les cordons 212 s'étendent jusqu'au premier bord 50 de la plaque 100 et jusqu'au deuxième bord 52 de la plaque 100 comme pour les zones entre les lignes de soudure.

Le procédé de fabrication comporte alors entre la première étape de mise en place et la deuxième étape de mise en place, une étape de dépose au cours de laquelle des cordons 212 d'un isolant sont déposés sur le premier feuillard 102 et où les cordons 212 s'étendent entre deux bords du premier feuillard 102, et la deuxième étape de mise en place consiste alors à mettre en place le deuxième feuillard 104 sur les cordons 212 et où les cordons 212 s'étendent entre deux bords du deuxième feuillard 104.

Si besoin, les cordons d'isolant 212 peuvent être retirés par l'injection d'un fluide approprié dans les canaux 150.

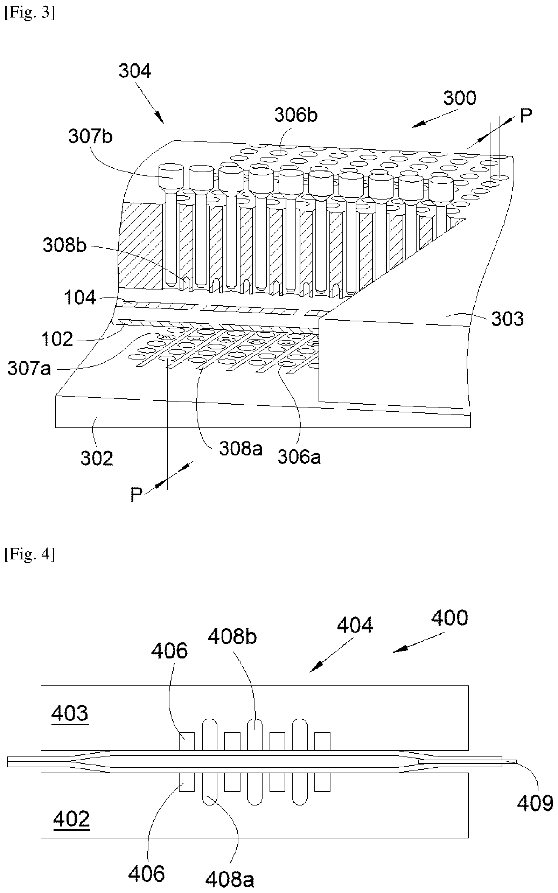

La Fig. 3 montre un outil 300 qui permet de conformer deux feuillards 102 et 104 en titane ou en alliage de titane sous la forme de la plaque 100 au cours d'un procédé selon un mode de réalisation de l'invention.

L'outil 300 comporte un moule 302 formant ici un socle, un contre-moule 303 qui se positionne au-dessus du moule 302 et un outil de soudage 304.

Les deux feuillards 102 et 104 sont disposés entre le moule 302 et le contre-moule 303.

Le moule 302 et le contre-moule 303 comportent une pluralité de trous 306a-b où les trous 306a-b ont des axes perpendiculaires aux plans des feuillards 102 et 104.

L'outil de soudage 304 comporte une pluralité d'aiguilles 307a où chaque aiguille 307a s'insère dans un trou 306a du moule 302 et une pluralité de contre-aiguilles 307b où chaque contre-aiguille 307b s'insère dans un trou 306b du contre-moule 303.

Les aiguilles 307a peuvent être disposées en vis-à-vis des contre-aiguilles 307b. Il est cependant envisageable que les aiguilles 307a soient disposées en quinconce par rapport aux contre-aiguilles 307b.

L'outil de soudage 304 comporte également un générateur de tension qui alimente les aiguilles 307a et les contre-aiguilles 307b afin de générer un arc de soudure entre les feuillards 102 et 104 et chaque aiguille 307a ou chaque contre contre-aiguille 307b.

Dans le mode de réalisation de l'invention présenté à la Fig. 3, l'outil de soudage 304 comporte une rangée d'aiguilles 307a et une rangée de contre-aiguilles 307b, mais il est possible de prévoir plusieurs rangées d'aiguilles 307a et de contre-aiguilles 307b et d'alimenter les aiguilles 307a et les contre-aiguilles 307b souhaitées.

Dans le mode de réalisation présenté à la Fig. 3, les trous 306a du moule 302 sont décalés linéairement les uns par rapport aux autres d'un pas P et les trous 306b du contre-moule 303 sont également décalés linéairement les uns par rapport aux autres du même pas P, et les trous 306a du moule 302 et les trous 306b du contre-moule 303 sont décalés linéairement les uns par rapport aux autres d'un demi-pas P de manière à ce qu'un trou 306b du contre-moule 303 se situe à égale distance de deux trous 306a consécutifs du moule 302 et inversement. Le pas P s'étend parallèlement à la direction des lignes de soudure à réaliser.

Au niveau de chaque aiguille 307a et de chaque contre-aiguille 307b est réalisé un point de soudure et par déplacement successif des aiguilles 307a et des contre-aiguilles 307b, il est possible de réaliser une succession de points de soudure qui vont à terme réaliser des lignes de soudure. Le décalage des aiguilles 307a et des contre-aiguilles 307b permet de souder un coup du côté du premier feuillard 102, puis du côté du deuxième feuillard 104.

La ligne de soudure est formée par une succession de points de soudure alternativement réalisés par les aiguilles 307a et les contre-aiguilles 307b.

Après que l'outil de soudage 304 a réalisé l'ensemble des lignes de soudure, les zones entre les lignes de soudure, c'est-à-dire les zones où les deux feuillards 102 et 104 ne sont pas soudés ensemble, seront déformées et constitueront à terme les canaux 150 de la plaque 100.

Comme précédemment exposé, les zones entre les lignes de soudure vont mener à la création de ces canaux 150 débouchant aux bords des feuillards 102 et 104 et elles s'étendent donc respectivement jusqu'au premier bord de la plaque 100 et jusqu'au deuxième bord de la plaque 100.

Afin de conformer les canaux 150, un fluide sous pression est injecté entre les feuillards 102 et 104 et au niveau des zones entre les lignes de soudure, et les deux feuillards 102 et 104 au niveau de ces zones vont alors s'écarter l'un de l'autre pour former les canaux 150. Pour réaliser l'injection du fluide sous pression, il est nécessaire d'obturer les zones qui sont entre le premier feuillard 102 et le deuxième feuillard 104 et qui sont au niveau d'un des bords du premier feuillard 102 et du deuxième feuillard 104 le long duquel les zones entre les lignes de soudure débouchent à une de leurs extrémités. L'injection de fluide sous pression s'effectue alors au niveau de l'autre bord du premier feuillard 102 et du deuxième feuillard 104 le long duquel les zones entre les lignes de soudure débouchent à leurs autres extrémités.

Pour que la conformation des canaux 150 soit celle attendue, le moule 302 et le contre-moule 303 comportent entre les trous 306a-b, des formes femelles 308a-b correspondant aux empreintes des canaux 150 à obtenir. Ainsi, lors de l'injection du fluide comprimé, les feuillards 102 et 104 vont s'écarter et venir épouser les formes femelles 308a-b et ainsi les canaux 150 vont se former. Les formes femelles 308a-b sont réalisées sur les faces du moule 302 et du contre-moule 303 qui sont contre les feuillards 102 et 104.

Les zones préalablement obturées sont ensuite débouchées pour permettre l'écoulement du fluide dans les canaux 150 de la plaque 100.

Un procédé de fabrication d'une plaque 100 d'un échangeur thermique, selon un mode de réalisation de l'invention, comporte :
- une première étape de mise en place au cours de laquelle un premier feuillard 102 est mis en place sur le moule 302,
- une deuxième étape de mise en place au cours de laquelle un deuxième feuillard 104 est mis en place sur le premier feuillard 102,
- une étape de recouvrement au cours de laquelle le contre-moule 303 est mis en place sur le deuxième feuillard 104,
- une étape de soudage au cours de laquelle les aiguilles 307a sont introduites dans les trous 306a du moule 302 et les contre-aiguilles 307b sont introduites dans les trous 306b du contre-moule 303, et les aiguilles 307a et les contre-aiguilles 307b sont alimentées par le générateur de tension pour souder les deux feuillards 102 et 104 ensemble le long des lignes de soudure,
- une étape d'obturation au cours de laquelle les zones entre le premier feuillard 102 et le deuxième feuillard 104 au niveau desquelles les zones entre les lignes de soudure débouchent au niveau d'un des bords du premier feuillard 102 et du deuxième feuillard 104, sont obturées,
- une étape de mise en pression au cours de laquelle un fluide comprimé est injecté au niveau d'un autre bord du premier feuillard 102 et du deuxième feuillard 104, là où les zones entre les lignes de soudure débouchent entre le premier feuillard 102 et le deuxième feuillard 104 de manière à réaliser l'expansion des feuillards 102 et 104 au niveau des formes femelles, et
- une étape de débouchage au cours de laquelle les zones obturées lors de l'étape d'obturation sont débouchées.

L'étape de soudage est répétée pour chaque ligne de soudure après déplacement des aiguilles 307a et des contre-aiguilles 307b ou par activations successives de plusieurs rangées d'aiguilles 307a et de contre-aiguilles 307b.

Le procédé de fabrication commun au mode de réalisation de la Fig. 2 et au mode de réalisation de la Fig. 3 consiste en successivement :
- une étape de superposition au cours de laquelle les deux feuillards 102 et 104 sont superposés l'un sur l'autre,
- une étape de soudage au cours de laquelle les deux feuillards 102 et 104 sont soudés ensemble le long des lignes de soudure,
- une étape d'obturation au cours de laquelle les zones entre le premier feuillard 102 et le deuxième feuillard 104 au niveau desquelles les zones entre les lignes de soudure débouchent au niveau d'un des bords 50, 52 du premier feuillard 102 et du deuxième feuillard 104, sont obturées,
- une étape de mise en pression au cours de laquelle un fluide comprimé est injecté au niveau d'un autre bord 52, 50 du premier feuillard 102 et du deuxième feuillard 104, là où les zones entre les lignes de soudure débouchent entre le premier feuillard 102 et le deuxième feuillard 104 de manière à réaliser l'expansion des feuillards 102 et 104, et
- une étape de débouchage au cours de laquelle les zones obturées lors de l'étape d'obturation sont débouchées.

Dans le premier cas, l'étape de superposition consiste successivement en la première étape de mise en place au cours de laquelle un premier feuillard 102 est mis en place sur le socle 202, en la deuxième étape de mise en place au cours de laquelle un deuxième feuillard 104 est mis en place sur le premier feuillard 102, et en l'étape de recouvrement au cours de laquelle les pièces d'appui 206a-b sont disposées sur le deuxième feuillard 104. L'étape de soudage consiste alors en un déplacement de l'unité de soudage 210 le long du canal de soudage 208 pour souder les deux feuillards 102 et 104 ensemble le long des lignes de soudure.

Dans le mode de réalisation selon l'invention, l'étape de superposition consiste successivement en la première étape de mise en place au cours de laquelle un premier feuillard 102 est mis en place sur le moule 302, en la deuxième étape de mise en place au cours de laquelle un deuxième feuillard 104 est mis en place sur le premier feuillard 102, et en l'étape de recouvrement au cours de laquelle le contre-moule 303 est mis en place sur le deuxième feuillard 104.

La Fig. 4 montre un outil 400 qui permet de conformer deux feuillards 102 et 104 en titane ou en alliage de titane sous la forme de la plaque 100 au cours d'un procédé selon un mode de réalisation qui ne fait pas l'objet de la revendication 1.

L'outil 400 comporte un moule 402 formant ici un socle, un contre-moule 403 qui se positionne au-dessus du moule 402 et un outil de soudage 404.

Les deux feuillards 102 et 104 sont disposés entre le moule 402 et le contre-moule 403.

Le moule 402 et le contre-moule 403 comportent une pluralité d'éléments de soudage 406, tels que des éléments chauffants résistifs qui sont alignés selon plusieurs rangées, et où les éléments de soudage 406 du moule 402 et du contre-moule 403 sont alignés, ici verticalement.

L'outil de soudage 404 comporte la pluralité d'éléments de soudage 406 répartis en rangées sur le moule 402 et le contre-moule 403 et un générateur de courant qui alimente les éléments de soudage 406 afin de créer un arc électrique qui génère une augmentation de température qui va entraîner le soudage des feuillards 102 et 104 entre eux.

Au niveau de chaque rangée d'éléments de soudage 406 est réalisée une ligne de soudure.

Le moule 402 et le contre-moule 403 comportent également des formes femelles 408a-b correspondant aux empreintes des canaux 150 à obtenir.

Les éléments de soudage 406 et les formes femelles 408a-b sont réalisés sur les faces du moule 402 et du contre-moule 403 qui sont contre les feuillards 102 et 104.

Le principe de réalisation de plaque 100 consiste à souder l'ensemble des bords des deux feuillards 102 et 104 entre eux afin de délimiter entre eux un volume fermé. Un fluide sous pression est ensuite introduit dans ce volume fermé par exemple par un tube 409 débouchant dans le volume fermé. Puis le moule 402 et le contre-moule 403 sont rapprochés pour forcer le contact entre les deux feuillards 102 et 104 entre les éléments de soudage 406. Au cours de cette étape, le tube 409 est obturé pour éviter la fuite du fluide sous pression, et dans le même temps, par conservation du volume du fluide sous pression dans le volume fermé, les feuillards 102 et 104 se déforment au niveau des formes femelles 408a-b afin de former les canaux 150. Les éléments de soudage 406 sont alors activés pour réaliser le soudage des deux feuillards 102 et 104 le long des lignes de soudure. Les extrémités des canaux 150 par lesquelles le fluide caloporteur circule sont ensuite ouvertes, par exemple par découpage des bords des feuillards 102 et 104.

Après que l'outil de soudage 404 a réalisé l'ensemble des lignes de soudure, les zones entre les lignes de soudure, c'est-à-dire les zones où les deux feuillards 102 et 104 ne sont pas soudés ensemble et ont donc été déformés, constituent les canaux 150 de la plaque 100.

Après ouverture des extrémités des canaux 150, les zones entre les lignes de soudure débouchent aux bords des feuillards 102 et 104 et elles s'étendent donc respectivement jusqu'au premier bord de la plaque 100 et jusqu'au deuxième bord de la plaque 100.

Un procédé de fabrication d'une plaque 100 d'un échangeur thermique selon un mode de réalisation qui ne fait pas l'objet de la revendication 1 comporte successivement :
- une première étape de mise en place au cours de laquelle le deuxième feuillard 104 est mis en place sur le premier feuillard 102,
- une première étape de soudage au cours de laquelle les bords des deux feuillards 102 et 104 sont soudés entre eux pour délimiter un volume fermé,
- une étape de mise en pression au cours de laquelle un fluide comprimé est injecté dans le volume fermé de manière à gonfler le volume fermé,
- une deuxième étape de mise en place au cours de laquelle les feuillards 102 et 104 ainsi gonflés sont disposés entre un moule 402 et un contre-moule 403, où le moule 402 comporte des éléments de soudage 406 et des formes femelles 408a, et où le contre-moule 403 comporte des éléments de soudage 406 alignés avec les éléments de soudage 406 du moule 402 et des formes femelles 408b alignées avec les formes femelles 408a du moule 402,
- une étape de resserrement au cours de laquelle le moule 402 et le contre-moule 403 sont rapprochés de manière à ce que les deux feuillards 102 et 104 soient en contact le long des éléments de soudage 406 et déformés dans les formes femelles 408a-b, et
- une deuxième étape de soudage au cours de laquelle les éléments de soudage 406 sont activés pour souder les deux feuillards 102 et 104 ensemble le long des lignes de soudure.

Le fluide sous pression peut être par exemple de l'air, de l'huile ou tout autre fluide approprié.

De tels échangeurs thermiques 100 peuvent être empilés de manière à mettre en contact et à fixer les déformations 106, 108 d'un échangeur thermique 100 avec les déformations 108, 106 d'un autre échangeur thermique 100 disposé au-dessus, afin de créer des canaux ouverts qui sont délimités par les déformations 106 et 108 des deux échangeurs thermiques 100 et les zones soudées, c'est-à-dire entre les canaux 150. Ainsi, dans le cadre d'une pile à combustible, un liquide de refroidissement peut circuler dans les canaux 150 afin d'assurer la fonction d'échangeur thermique alors que dans les canaux ouverts ainsi formés de l'air et de l'hydrogène peuvent circuler.

## Revendications

1. Procédé de fabrication d'une plaque (100) comportant des canaux (150), le procédé de fabrication comportant :
- une étape de superposition au cours de laquelle deux feuillards (102, 104) en titane ou en alliage de titane sont superposés l'un sur l'autre,
- une étape de soudage au cours de laquelle les deux feuillards (102, 104) sont soudés ensemble le long des lignes de soudure,
- une étape d'obturation au cours de laquelle les zones entre le premier feuillard (102) et le deuxième feuillard (104) au niveau desquelles les zones entre les lignes de soudure débouchent au niveau d'un des bords (50, 52) du premier feuillard (102) et du deuxième feuillard (104) sont obturées,
- une étape de mise en pression au cours de laquelle un fluide comprimé est injecté au niveau d'un autre bord (52, 50) du premier feuillard (102) et du deuxième feuillard (104), là où les zones entre les lignes de soudure débouchent entre le premier feuillard (102) et le deuxième feuillard (104) de manière à réaliser l'expansion des feuillards (102, 104), et
- une étape de débouchage au cours de laquelle les zones obturées lors de l'étape d'obturation sont débouchées,
où l'étape de superposition consiste successivement en une première étape de mise en place au cours de laquelle le premier feuillard (102) est mis en place sur un moule (302), en une deuxième étape de mise en place au cours de laquelle le deuxième feuillard (104) est mis en place sur le premier feuillard (102), et en une étape de recouvrement au cours de laquelle un contre-moule (303) est mis en place sur le deuxième feuillard (104), où le moule (302) et le contre-moule (303) comportent une pluralité de trous (306a-b), et en ce que l'étape de soudage consiste à introduire des aiguilles (307a) dans les trous (306a) du moule (302) et des contre-aiguilles (307b) dans les trous (306b) du contre-moule (303) et à alimenter les aiguilles (307a) et les contre-aiguilles (307b) par un générateur de tension pour souder les deux feuillards (102, 104) ensemble le long des lignes de soudure, et où le moule (302) et le contre-moule (303) comportent entre les trous (306a-b), des formes femelles (308a-b) correspondant à des empreintes de canaux (150) à obtenir.

## Patentansprüche

1. Verfahren zur Herstellung einer Platte (100), die Kanäle (150) umfasst, wobei das Herstellungsverfahren Folgendes umfasst:
- einen Schritt des Übereinanderlegens, während dessen zwei Bänder (102, 104) aus Titan oder aus Titanlegierung übereinandergelegt werden,
- einen Schritt des Schweißens, während dessen die zwei Bänder (102, 104) entlang der Schweißnahtlinien miteinander verschweißt werden,
- einen Schritt des Verschließens, während dessen die Bereiche zwischen dem ersten Band (102) und dem zweiten Band (104), an denen die Bereiche zwischen den Schweißnahtlinien an einem der Ränder (50, 52) des ersten Bands (102) und des zweiten Bands (104) münden, verschlossen werden,
- einen Schritt der Druckbeaufschlagung, während dessen ein Druckfluid an einem anderen Rand (52, 50) des ersten Bands (102) und des zweiten Bands (104) eingebracht wird, dort, wo die Bereiche zwischen den Schweißnahtlinien zwischen dem ersten Band (102) und dem zweiten Band (104) münden, um das Aufweiten der Bänder (102, 104) durchzuführen, und
- einen Schritt des Öffnens, während dessen die während des Schritts des Verschließens verschlossenen Bereiche geöffnet werden,
wobei der Schritt des Übereinanderlegens nacheinander aus einem ersten Schritt des Platzierens, während dessen das erste Band (102) auf einer Form (302) platziert wird, einem zweiten Schritt des Platzierens, während dessen das zweite Band (104) auf dem ersten Band (102) platziert wird, und einem Schritt des Abdeckens, während dessen eine Gegenform (303) auf dem zweiten Band (104) platziert wird, besteht, wobei die Form (302) und die Gegenform (303) eine Vielzahl von Löchern (306a-b) umfassen, und dass der Schritt des Schweißens darin besteht, Nadeln (307a) in die Löcher (306a) der Form (302) und Gegennadeln (307b) in die Löcher (306b) der Gegenform (303) einzuführen und die Nadeln (307a) und die Gegennadeln (307b) mit Hilfe eines Spannungsgenerators zu versorgen, um die zwei Bänder (102, 104) entlang der Schweißnahtlinien miteinander zu verschweißen, und wobei die Form (302) und die Gegenform (303) zwischen den Löchern (306a-b) Aushöhlungen (308a-b) umfassen, welche zu erhaltenden Kanalausprägungen (150) entsprechen.

## Claims

1. Method for manufacturing a plate (100) including channels (150), the manufacturing method including:
- a superimposing step during which two strips (102, 104) of titanium or titanium alloy are superimposed on one another,
- a welding step during which the two strips (102, 104) are welded together along the weld lines,
- a closing step during which the zones between the first strip (102) and the second strip (104) where the zones between the weld lines open out at one of the edges (50, 52) of the first strip (102) and of the second strip (104) are closed,
- a pressurization step during which a compressed fluid is injected at another edge (52, 50) of the first strip (102) and of the second strip (104), where the zones between the weld lines open out between the first strip (102) and the second strip (104) so as to expand the strips (102, 104), and
- an opening stage during which the zones closed during the closing stage are opened,
where the superimposing step consists successively of a first placeing step during which the first strip (102) is placed on a mould (302), a second placing step during which the second strip (104) is placed on the first strip (102), and a covering step during which a countermould (303) is placed on the second strip (104), where the mould (302) and the countermould (303) include a plurality of holes (306a-b), and in that the welding step consists of inserting needles (307a) into the holes (306a) in the mould (302) and counter needles (307b) into the holes (306b) in the countermould (303) and powering the needles (307a) and the counter needles (307b) with a voltage generator to weld the two strips (102, 104) together along the weld lines, and where the mould (302) and the countermould (303) include, between the holes (306a-b), female shapes (308a-b) corresponding to impressions of the channels (150) to be obtained.
